# FASCICULE DE BREVET EUROPEEN

(11) **EP 3 085 995 B1**
(45) Date de publication et mention de la délivrance du brevet: **22.04.2020**
(21) Numéro de dépôt: 16161371.6
(22) Date de dépôt: 21.03.2016
(51) Int. Cl.: F16H 55/18, B60S 1/16

(54) **MOTOREDUCTEUR, NOTAMMENT POUR L' ENTRAINEMENT DES BRAS D' ESSUIE-GLACE D'UN VEHICULE AUTOMOBILE**
ELEKTROMOTOR MIT UNTERSETZUNGSGETRIEBE, INSBESONDERE FÜR DEN ANTRIEB DER SCHEIBENWISCHERARME EINES KRAFTFAHRZEUGS
GEAR MOTOR, IN PARTICULAR FOR DRIVING THE ARMS OF A MOTOR-VEHICLE WINDSCREEN WIPER

(30) Priorité: 14.04.2015 FR 1553214
(43) Date de publication de la demande: 26.10.2016
(73) Titulaire: Valeo Systèmes d'Essuyage, 78322 Le Mesnil Saint Denis (FR)
(72) Inventeur: LASSALLE, Christophe, 86450 Leigne les Bois (FR)
(74) Mandataire: Valeo Systèmes d'Essuyage

(56) Documents cités:
- WO-A1-2007/062977
- FR-A1- 2 679 184
- GB-A- 2 284 460
- JP-A- H01 288 664

## Description

### DOMAINE TECHNIQUE

La présente invention concerne un motoréducteur, notamment pour l'entraînement des bras d'essuie-glace d'un véhicule automobile.

### ETAT DE LA TECHNIQUE

Les motoréducteurs d'entraînement des bras d'essuie-glace, par exemple divulgué dans la demande FR2679184A1, comportent, entre un arbre menant entraîné par un moteur et un arbre mené, une transmission à engrenages comportant au moins une vis sans fin solidaire de l'arbre menant engrenant avec une première denture d'un pignon intermédiaire, tandis qu'une seconde denture du pignon intermédiaire engrène avec un pignon mené solidaire de l'arbre mené.

Les jeux entre les dentures de la transmission à engrenages sont prévus suffisamment grands pour permettre la dilatation thermique des pignons sans altération du fonctionnement des engrenages.

On constate cependant que les dimensions élevées de ces jeux mécaniques permettent également aux dentures coopérant par engrenage de bouger sensiblement l'une par rapport à l'autre, et ainsi de changer de profil en contact sous l'effet de variations de charge en bout d'arbre menant, à température ambiante, ces charges étant très faibles et variant. Cette inconstance au niveau des profils de denture en contact peut être à l'origine de micro-chocs ou de vibrations, qui sont des sources de bruit.

### EXPOSE DE L'INVENTION

Un des buts de la présente invention est de proposer un motoréducteur, notamment pour l'entraînement des bras d'essuie-glace d'un véhicule automobile, dont les bruits de fonctionnement sont réduits et dont les à-coups en cours de fonctionnement sont sensiblement atténués.

A cet effet, l'invention a pour objet un motoréducteur, notamment pour l'entraînement des bras d'essuie-glace d'un véhicule automobile, comportant :
- un arbre menant,
- un arbre mené,
- une transmission à engrenages entre l'arbre menant et l'arbre mené, comportant :
   ∘ une première vis sans fin solidaire de l'arbre menant,
   ∘ un premier pignon intermédiaire présentant une première et une seconde denture, la première denture du premier pignon intermédiaire engrenant avec la première vis sans fin,
   ∘ une roue menée solidaire de l'arbre mené présentant une denture de sortie, engrenant avec la seconde denture du premier pignon intermédiaire,
      dans lequel la denture de sortie de la roue menée et la seconde denture du premier pignon intermédiaire sont conformées de sorte que deux flancs opposés d'une dent de la denture de sortie de la roue menée engrenant avec la seconde denture du premier pignon intermédiaire sont en contact avec la seconde denture du premier pignon intermédiaire.

Lors du fonctionnement les deux flancs opposés d'une dent de la denture de sortie de la roue menée engrenant avec la seconde denture du premier pignon intermédiaire entrent ainsi simultanément en contact avec la seconde denture du premier pignon intermédiaire.

On empêche ainsi la roue menée de changer de profil en contact avec le pignon intermédiaire. Ainsi, les bruits de fonctionnement sont réduits et les à-coups en cours de fonctionnement sont sensiblement atténués.

Selon l'invention, ladite dent de la denture de sortie de la roue menée est en contact avec la seconde denture du premier pignon intermédiaire en deux emplacements axialement décalés. Par exemple, les contacts sont situés aux deux extrémités axiales de la roue menée.

Selon l'invention, un jeu de denture est maintenu à l'opposé du contact, entre le flanc de la dent de la denture de sortie de la roue menée opposé au flanc en contact avec la seconde denture du premier pignon intermédiaire et la seconde denture du premier pignon intermédiaire. Le jeu de denture entre la denture de sortie de la roue menée et la seconde denture du premier pignon intermédiaire est par exemple inférieur à 150µm, notamment compris entre 50 et 150µm.

Selon un exemple de réalisation, l'axe de rotation du premier pignon intermédiaire est parallèle à l'axe de rotation de l'arbre de sortie.

De façon préférentielle, au moins l'une parmi la denture de sortie de la roue menée et la seconde denture du premier pignon intermédiaire est une denture hélicoïdale.

L'angle d'hélice de la denture hélicoïdale est en particulier compris entre 0,10° et 5°, notamment entre 0,10° et 1°, voire entre 0,15° et 0,85°.

Selon un premier mode de réalisation, l'une parmi la denture de sortie de la roue menée et la seconde denture du premier pignon intermédiaire est droite et l'autre est une denture hélicoïdale. Selon un exemple de réalisation, la seconde denture du premier pignon intermédiaire est droite et la denture de sortie de la roue menée est hélicoïdale, ce qui facilite la réalisation. Selon un autre exemple de réalisation, la seconde denture du premier pignon intermédiaire est hélicoïdale et la denture de sortie de la roue menée est droite.

Selon un deuxième mode de réalisation, la seconde denture du premier pignon intermédiaire et la denture de sortie de la roue menée sont hélicoïdales, la seconde denture du premier pignon intermédiaire et la denture de sortie de la roue menée présentant des sens d'hélice opposés et des angles d'hélice respectif distincts.

Dans ce cas par exemple, la différence angulaire entre les angles d'hélice des dentures hélicoïdales est comprise entre 0,10° et 5°, notamment entre 0,10° et 1°, voire entre 0,15° et 0,85°.

Selon un exemple de réalisation, les profils de la denture de sortie de la roue menée et de la seconde denture du premier pignon intermédiaire sont en développante de cercle, afin de ne pas dépendre de l'entraxe de fonctionnement.

Selon un exemple de réalisation, l'épaisseur de la dent de la denture de sortie de la roue menée est comprise entre 10 et 20 millimètres, notamment entre 10 et 20 millimètres.

Selon un exemple de réalisation, la transmission à engrenages comporte un deuxième pignon intermédiaire identique au premier pignon intermédiaire, présentant une première et une seconde denture, la première denture du deuxième pignon intermédiaire engrenant avec une seconde vis sans fin solidaire de l'arbre menant, et la seconde denture du second pignon intermédiaire engrenant avec la denture de sortie de la roue menée, les premières dentures des pignons intermédiaires coopérant avec les vis sans fin étant hélicoïdales avec des sens d'hélice opposés. L'emploi de deux pignons intermédiaires engrenant l'arbre menant avec des hélices opposées plutôt qu'un seul permet d'équilibrer les efforts axiaux exercés, ce qui améliore le rendement pour la transmission du couple de sortie.

Selon un autre de ses aspects l'invention concerne également un système d'essuie-glace comportant au moins un balai d'essuie-glace et un motoreducteur tel que décrit ci-dessus.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue partielle en perspective d'un motoréducteur, partiellement vue en coupe et en éclaté,
- la figure 2 est une vue en coupe et de côté du motoréducteur de la figure 1, et
- la figure 3 représente une vue schématique agrandie des profils actifs de la denture de sortie de la roue menée et d'une seconde denture du premier pignon intermédiaire du motoréducteur de la figure 1.

Sur ces figures, les éléments identiques ou analogues portent les mêmes numéros de référence.

### DESCRIPTION DÉTAILLÉE

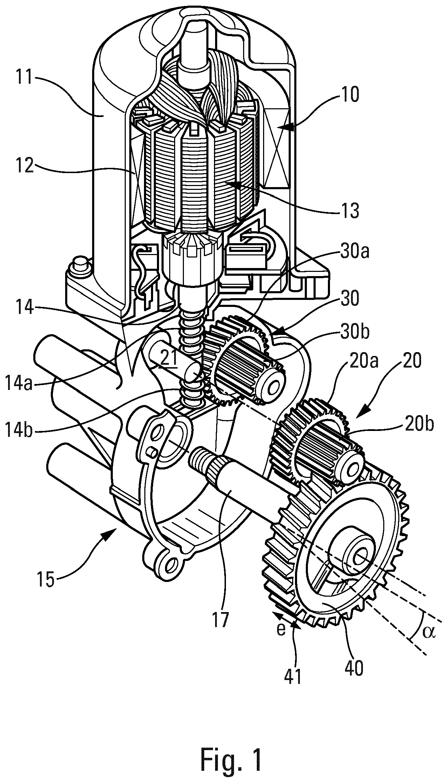

En référence à la figure 1, on a représenté un motoréducteur 100, notamment pour l'entraînement des bras d'essuie-glace de véhicule automobile, qui comprend un moteur électrique d'entraînement 10 logé dans un carter 11. Ce moteur, à courant continu, comprend classiquement un stator 12 et un rotor 13 dont l'arbre 14 qui fait saillie porte une première vis sans fin 14a. Dans l'exemple illustré l'arbre 14 comporte une seconde vis sans fin 14b adjacente à la première, de sens opposé et de même pas.

Le motoréducteur comprend également un socle 15 traversé par l'arbre 14 de sortie du moteur (arbre menant) et qui abrite des organes de transfert rotatifs 25 d'une transmission à engrenages entre cet arbre menant 14 et un arbre de sortie 17 du réducteur (arbre mené).

Les organes de transfert rotatifs 25 comprennent par exemple un premier pignon intermédiaire 20 monté rotatif sur un premier pivot 21 défini par le socle 15. Le premier pignon intermédiaire 20 comporte une première denture 20a et une seconde denture 20b, coaxiales. La première denture 20a, de plus grand diamètre que la seconde denture 20b, coopère avec la première vis sans fin 14a la plus proche du rotor 13.

Dans la variante de réalisation illustrée il est prévu un deuxième pignon intermédiaire 30, similaire au premier pignon intermédiaire 20, et monté de la même manière sur un deuxième pivot 31. Une première denture 30a de ce deuxième pignon intermédiaire 30 coopère avec une seconde vis sans fin 14b de l'arbre menant 14. Cette dernière seconde vis sans fin 14b est par exemple adjacente à la première vis sans fin 14a, de sens opposé et/ou de même pas. L'emploi de deux pignons intermédiaires 20, 30 engrenant l'arbre menant 14 avec des hélices opposées permet d'équilibrer les efforts axiaux exercés, ce qui améliore le rendement pour la transmission du couple de sortie.

Les axes de rotation du premier et du deuxième pignons intermédiaires 20, 30 sont parallèles à l'axe de rotation de l'arbre de sortie 17.

Les premières dentures 20a, 30a qui coopèrent avec les vis sans fin 14a, 14b sont ici hélicoïdales, avec des sens d'hélice opposés.

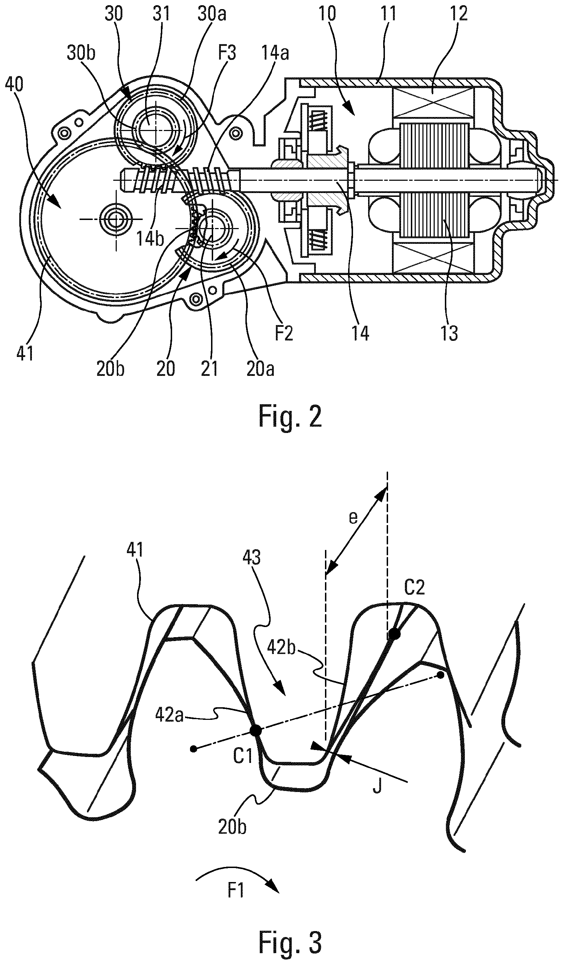

Les secondes dentures 20b, 30b des pignons intermédiaires 20, 30, de diamètre plus petit, engrènent avec la denture de sortie 41 d'une roue menée 40 solidaire de l'arbre mené 17, en sortie du motoréducteur, comme cela est mieux visible sur la figure 2.

En outre, et comme on peut le voir sur la figure 3, la denture de sortie 41 de la roue menée 40 et la seconde denture 20b du premier pignon intermédiaire 20 sont conformées de sorte que deux flancs 42a, 42b opposés d'au moins une dent 43 de la denture de sortie 41 de la roue menée 40 engrenant avec la seconde denture 20b du premier pignon intermédiaire 20 sont simultanément en contact avec la seconde denture 20b du premier pignon intermédiaire 20.

De même, la denture de sortie 41 de la roue menée 40 et la seconde denture 30b du deuxième pignon intermédiaire 30 sont conformées de sorte que deux flancs opposés d'au moins une dent de la denture de sortie 41 de la roue menée 40 engrenant avec la seconde denture 30b du deuxième pignon intermédiaire 30 sont simultanément en contact avec la seconde denture 30b du deuxième pignon intermédiaire 30.

La dent 43 de la denture de sortie 41 de la roue menée 40 est en contact avec la seconde denture 20b, 30 du pignon intermédiaire 20, 30 par exemple en deux emplacements C1, C2 axialement décalés par rapport à l'axe de rotation des pignons comme illustré à la figure 2.

On prévoit par exemple pour plus de stabilité que ces deux emplacements C1, C2 sont situés aux deux extrémités axiales de la roue menée 40. Cependant, les emplacements C1 et C2 peuvent varier le long de l'épaisseur e de la denture de sortie 41 de la roue menée 40 en fonction des tolérances de fabrication des pignons intermédiaires 20, 30 et de la roue menée 40.

En outre, un jeu de denture J est maintenu à l'opposé du contact C1, entre le flanc 42b de la dent 43 de la denture de sortie 41 de la roue menée 40 et la seconde denture 20b du premier pignon intermédiaire 20.

Ce même jeu de denture J se retrouve en toute section droite de l'engrenage de la roue menée 40 et du pignon intermédiaire 20, 30. Ainsi, le même jeu de denture J est maintenu à l'opposé du contact C2, entre le flanc 42a de la dent 43 de la denture de sortie 41 de la roue menée 40 et la seconde denture 20b du premier pignon intermédiaire 20, à l'arrière des engrenages par rapport à la figure 3.

Il en est de même entre la denture de sortie 41 de la roue menée 40 et la seconde denture 30b du deuxième pignon intermédiaire 30.

Ce jeu de denture J permet le fonctionnement de l'engrenage en autorisant la dilatation de la roue menée 40 et des pignons intermédiaires 20, 30. En outre, il permet d'absorber les écarts de fabrication.

Selon un exemple de réalisation représenté sur la figure 1, l'une parmi la denture de sortie 41 de la roue menée 40 et les secondes dentures 20b, 30b des pignons intermédiaires 20, 30 est droite et l'autre est hélicoïdale.

Pour plus de facilité de réalisation, on prévoit par exemple et comme illustré sur les figures 1 à 3 que ce sont les secondes dentures 20b, 30b des pignons intermédiaires 20, 30 qui sont droites et la denture de sortie 41 du pignon mené 40, qui est hélicoïdale.

Par exemple, l'épaisseur e de la denture de sortie 41 de la roue menée 40 est comprise entre 10 et 20 millimètres. Le jeu de denture J entre les profils actifs de la denture de sortie 41 de la roue menée 40 et la seconde denture 20b, 30b des pignons intermédiaires est compris entre 50 et 150µm. L'angle d'hélice α de la denture hélicoïdale, de la denture de sortie 41 de la roue menée 40 dans l'exemple représenté sur les figures 1 à 3, est faible, tel que compris entre 0,15° et 0,85°.

Selon un exemple de réalisation, l'épaisseur e de la denture de sortie 41 de la roue menée 40 est de l'ordre de 13 millimètres, le jeu de denture J entre les profils actifs de la denture de sortie 41 de la roue menée 40 et la seconde denture 20b, 30b des pignons intermédiaires 20, 30 est de l'ordre de 100µm et l'angle d'hélice α de la denture hélicoïdale de la denture de sortie 41 de la roue menée 40 est de l'ordre de 0,45°.

Selon un exemple de réalisation, les profils des dentures droite et hélicoïdale de la denture de sortie 41 de la roue menée 40 et des secondes dentures des pignons intermédiaires 20, 30 sont en développante de cercle, afin de ne pas dépendre de l'entraxe de fonctionnement.

La roue menée 40 et les pignons intermédiaires 20, 30 sont par exemple réalisés en matériau plastique.

Ainsi, en supposant que le pignon intermédiaire 20 tourne dans le sens de rotation horaire (flèche F1 sur la figure 3), le pignon intermédiaire 20 entraîne en rotation la roue menée 40 en transmettant l'effort au contact C1. La seconde denture 20b du pignon intermédiaire 20 est ainsi en contact sur le flanc 42a de la dent 43 du profil actif en C1 pour l'entraînement de la roue menée 40. La seconde denture 20b du pignon intermédiaire 20 est également en contact sur le flanc opposé 42b de la dent 43 du profil actif en C2. Ce deuxième contact C2 ne transmet pas d'efforts du pignon intermédiaire 20 vers la roue menée 40 mais sert uniquement de butée pour la dent 43 du profil actif de la denture de sortie 41 de la roue menée 40. On empêche ainsi la roue menée 40 de changer de profil en contact avec le pignon intermédiaire 20.

On assure ainsi le contact des engrenages entre la roue menée 40 et les pignons intermédiaires 20, 30, ce qui permet d'éviter que ces derniers changent de profil en contact. Ainsi, les bruits de fonctionnement sont réduits et les à-coups en cours de fonctionnement sont sensiblement atténués.

## Revendications

1. Motoréducteur (100), pour l'entraînement de bras d'essuie-glace d'un véhicule automobile, comportant :
- un arbre menant (14),
- un arbre mené (17),
- une transmission à engrenages entre l'arbre menant (14) et l'arbre mené (17), comportant :
∘ une première vis sans fin (14a) solidaire de l'arbre menant (14),
∘ un premier pignon intermédiaire (20) présentant une première et une seconde denture (20a, 20b), la première denture (20a) du premier pignon intermédiaire (20) engrenant avec la première vis sans fin (14a),
∘ une roue menée (40) solidaire de l'arbre mené (17) présentant une denture de sortie (41), engrenant avec la seconde denture (20b) du premier pignon intermédiaire (20),
dans lequel la denture de sortie (41) de la roue menée (40) et la seconde denture (20b) du premier pignon intermédiaire (20) sont conformées de sorte que deux flancs (42a, 42b) opposés d'une dent (43) de la denture de sortie (41) de la roue menée (40) engrenant avec la seconde denture (20b) du premier pignon intermédiaire (20) sont en contact avec la seconde denture (20b) du premier pignon intermédiaire (20),
**caractérisé en ce que** ladite dent (43) de la denture de sortie (41) de la roue menée (40) est en contact avec la seconde denture (20b) du premier pignon intermédiaire (20) en deux endroits (C1, C2) axialement décalés et **en ce qu'**un jeu de denture (J) est maintenu à l'opposé du contact (C1, C2), entre le flanc (42a, 42b) de la dent (43) de la denture de sortie (41) de la roue menée (40) et la seconde denture (20b) du premier pignon intermédiaire (20).

2. Motoréducteur selon la revendication précédente, **caractérisé en ce que** le jeu de denture (J) entre la denture de sortie (41) de la roue menée (40) et la seconde denture (20b) du premier pignon intermédiaire (20) est inférieur à 150 µm, notamment compris entre 50 et 150µm.

3. Motoréducteur selon l'une des revendications 1 ou 2, **caractérisé en ce que** les deux endroits (C1, C2) sont situés aux deux extrémités axiales de la roue menée (40).

4. Motoréducteur selon l'une quelconque des revendications précédentes, **caractérisé en ce qu'**au moins l'une parmi la denture de sortie (41) de la roue menée (40) et la seconde denture (20b) du premier pignon intermédiaire (20) est une denture hélicoïdale.

5. Motoréducteur selon la revendication précédente, **caractérisé en ce que** l'angle d'hélice (α) de la denture hélicoïdale est compris entre 0,10 ° et 5°.

6. Motoréducteur selon l'une des revendications 4 ou 5, **caractérisé en ce que** l'autre parmi la denture de sortie (41) de la roue menée (40) et la seconde denture (20b) du premier pignon intermédiaire (20) est droite.

7. Motoréducteur selon l'une quelconque des revendications 1 à 5, **caractérisé en ce que** la seconde denture du premier pignon intermédiaire (20) et la denture de sortie de la roue menée (40) sont hélicoïdales, la seconde denture du premier pignon intermédiaire et la denture de sortie de la roue menée présentant des angles d'hélice respectif distincts.

8. Motoréducteur selon la revendication précédente, **caractérisé en ce que** la différence angulaire entre les angles d'hélice des dentures hélicoïdales est comprise entre 0,10° et 5°.

9. Motoréducteur selon l'une quelconque des revendications précédentes, **caractérisé en ce que** l'axe de rotation du premier pignon intermédiaire (20) est parallèle à l'axe de rotation de l'arbre de sortie (17).

10. Motoréducteur selon l'une quelconque des revendications précédentes, **caractérisé en ce que** l'épaisseur (e) de la dent (43) de la denture de sortie (41) de la roue menée (40) est comprise entre 10 et 20 millimètres.

11. Motoréducteur selon l'une quelconque des revendications précédentes, **caractérisé en ce que** la transmission à engrenages comporte un deuxième pignon intermédiaire (30) présentant une première et une seconde denture (30a, 30b), la première denture (30a) du deuxième pignon intermédiaire (30) engrenant avec une seconde vis sans fin (14b) solidaire de l'arbre menant (14), et la seconde denture (30b) du second pignon intermédiaire (30) engrenant avec la denture de sortie (41) de la roue menée (40).

12. Motoréducteur selon la revendication précédente, **caractérisé en ce que** les premières dentures (20a, 30a) des pignons intermédiaires (20, 30) coopérant avec les vis sans fin (14a, 14b) sont hélicoïdales avec des sens d'hélice opposés.

## Patentansprüche

1. Getriebemotor (100) für den Antrieb von Scheibenwischerarmen eines Kraftfahrzeugs, umfassend:
- eine Antriebswelle (14),
- eine getriebene Welle (17),
- ein Zahnradgetriebe zwischen der Antriebswelle (14) und der getriebenen Welle (17), umfassend:
∘ eine erste mit der Antriebswelle (14) fest verbundene Schnecke (14a),
∘ ein erstes Zwischenritzel (20), das eine erste und eine zweite Verzahnung (20a, 20b) aufweist, wobei die erste Verzahnung (20a) des ersten Zwischenritzels (20) mit der ersten Schnecke (14a) in Eingriff steht,
∘ ein mit der getriebenen Welle (17) fest verbundenes getriebenes Rad (40), das eine Abtriebsverzahnung (41) aufweist, die mit der zweiten Verzahnung (20b) des ersten Zwischenritzels (20) in Eingriff steht,
wobei die Abtriebsverzahnung (41) des getriebenen Rades (40) und die zweite Verzahnung (20b) des ersten Zwischenritzels (20) so ausgebildet sind, dass zwei entgegengesetzte Flanken (42a, 42b) eines Zahns (43) der Abtriebsverzahnung (41) des getriebenen Rades (40), das mit der zweiten Verzahnung (20b) des ersten Zwischenritzels (20) in Eingriff steht, in Kontakt mit der zweiten Verzahnung (20b) des ersten Zwischenritzels (20) sind,
**dadurch gekennzeichnet, dass** der Zahn (43) der Abtriebsverzahnung (41) des getriebenen Rades (40) mit der zweiten Verzahnung (20b) des ersten Zwischenritzels (20) an zwei axial versetzten Stellen (C1, C2) in Kontakt ist und dass ein Verzahnungsspiel (J) entgegengesetzt zum Kontakt (C1, C2) zwischen der Flanke (42a, 42b) des Zahns (43) der Abtriebsverzahnung (41) des getriebenen Rades (40) und der zweiten Verzahnung (20b) des ersten Zwischenritzels (20) aufrechterhalten wird.

2. Getriebemotor nach dem vorhergehenden Anspruch, **dadurch gekennzeichnet, dass** das Verzahnungsspiel (J) zwischen der Abtriebsverzahnung (41) des getriebenen Rades (40) und der zweiten Verzahnung (20b) des ersten Zwischenritzels (20) weniger als 150 µm, insbesondere zwischen 50 und 150 µm beträgt.

3. Getriebemotor nach einem der Ansprüche 1 oder 2, **dadurch gekennzeichnet, dass** die beiden Stellen (C1, C2) an den beiden axialen Enden des getriebenen Rades (40) gelegen sind.

4. Getriebemotor nach einem der vorhergehenden Ansprüche, **dadurch gekennzeichnet, dass** unter der Abtriebsverzahnung (41) des getriebenen Rades (40) und der zweiten Verzahnung (20b) des ersten Zwischenritzels (20) mindestens eine eine Schrägverzahnung ist.

5. Getriebemotor nach dem vorhergehenden Anspruch, **dadurch gekennzeichnet, dass** Schrägungswinkel (α) der Schrägverzahnung zwischen 0,10° und 5° beträgt.

6. Getriebemotor nach einem der Ansprüche 4 oder 5, **dadurch gekennzeichnet, dass** unter der Abtriebsverzahnung (41) des getriebenen Rades (40) und der zweiten Verzahnung (20b) des ersten Zwischenritzels (20) die andere eine Geradverzahnung ist.

7. Getriebemotor nach einem der Ansprüche 1 bis 5, **dadurch gekennzeichnet, dass** die zweite Verzahnung des ersten Zwischenritzels (20) und die Abtriebsverzahnung des getriebenen Rades (40) Schrägverzahnungen sind, wobei die zweite Verzahnung des ersten Zwischenritzels und die Abtriebsverzahnung des getriebenen Rades jeweils unterschiedliche Schrägungswinkel aufweisen.

8. Getriebemotor nach dem vorhergehenden Anspruch, **dadurch gekennzeichnet, dass** die Winkeldifferenz zwischen den Schrägungswinkeln der Schrägverzahnungen zwischen 0,10° und 5° beträgt.

9. Getriebemotor nach einem der vorhergehenden Ansprüche, **dadurch gekennzeichnet, dass** die Rotationsachse des ersten Zwischenritzels (20) parallel zur Rotationsachse der Abtriebswelle (17) verläuft.

10. Getriebemotor nach einem der vorhergehenden Ansprüche, **dadurch gekennzeichnet, dass** die Dicke (e) des Zahns (43) der Abtriebsverzahnung (41) des getriebenen Rades (40) zwischen 10 und 20 Millimeter beträgt.

11. Getriebemotor nach einem der vorhergehenden Ansprüche, **dadurch gekennzeichnet, dass** das Zahnradgetriebe ein zweites Zwischenritzel (30) umfasst, das eine erste und eine zweite Verzahnung (30a, 30b) aufweist, wobei die erste Verzahnung (30a) des zweiten Zwischenritzels (30) mit einer zweiten Schnecke (14b) in Eingriff steht, die mit der Antriebswelle (14) fest verbunden ist, und die zweite Verzahnung (30b) des zweiten Zwischenritzels (30) mit der Abtriebsverzahnung (41) des getriebenen Rades (40) in Eingriff steht.

12. Getriebemotor nach dem vorhergehenden Anspruch, **dadurch gekennzeichnet, dass** die ersten Verzahnungen (20a, 30a) der Zwischenritzel (20, 30), die mit den Schnecken (14a, 14b) zusammenwirken, Schrägverzahnungen mit entgegengesetzten Schrägungsrichtungen sind.

## Claims

1. Geared motor (100), for driving the arms of a motor-vehicle windscreen wiper, comprising:
- a drive shaft (14),
- a driven shaft (17),
- a gear transmission between the drive shaft (14) and the driven shaft (17), comprising:
∘ a first worm screw (14a) that is as one with the drive shaft (14),
∘ a first intermediate pinion (20) having a first and a second toothing (20a, 20b), the first toothing (20a) of the first intermediate pinion (20) meshing with the first worm screw (14a),
∘ a driven wheel (40) that is as one with the driven shaft (17), having an output toothing (41) meshing with the second toothing (20b) of the first intermediate pinion (20),
in which the output toothing (41) of the driven wheel (40) and the second toothing (20b) of the first intermediate pinion (20) are formed such that two opposite flanks (42a, 42b) of a tooth (43) of the output toothing (41) of the driven wheel (40) meshing with the second toothing (20b) of the first intermediate pinion (20) are in contact with the second toothing (20b) of the first intermediate pinion (20),
**characterized in that** said tooth (43) of the output toothing (41) of the driven wheel (40) is in contact with the second toothing (20b) of the first intermediate pinion (20) at two axially offset locations (C1, C2), and **in that** a toothing play (J) is maintained opposite the contact (C1, C2), between the flank (42a, 42b) of the tooth (43) of the output toothing (41) of the driven wheel (40) and the second toothing (20b) of the first intermediate pinion (20).

2. Geared motor according to the preceding claim, **characterized in that** the toothing play (J) between the output toothing (41) of the driven wheel (40) and the second toothing (20b) of the first intermediate pinion (20) is less than 150 µm, in particular between 50 and 150 µm.

3. Geared motor according to either of Claims 1 and 2, **characterized in that** the two locations (C1, C2) are located at the two axial ends of the driven wheel (40) .

4. Geared motor according to any one of the preceding claims, **characterized in that** at least one from among the output toothing (41) of the driven wheel (40) and the second toothing (20b) of the first intermediate pinion (20) is a helical toothing.

5. Geared motor according to the preceding claim, **characterized in that** the helix angle (α) of the helical toothing is between 0.10° and 5°.

6. Geared motor according to either of Claims 4 and 5, **characterized in that** the other from among the output toothing (41) of the driven wheel (40) and the second toothing (20b) of the first intermediate pinion (20) is straight-cut.

7. Geared motor according to any one of Claims 1 to 5, **characterized in that** the second toothing of the first intermediate pinion (20) and the output toothing of the driven wheel (40) are helical, the second toothing of the first intermediate pinion and the output toothing of the driven wheel having different respective helix angles.

8. Geared motor according to the preceding claim, **characterized in that** the difference in angle between the helix angles of the helical toothings is between 0.10° and 5°.

9. Geared motor according to any one of the preceding claims, **characterized in that** the axis of rotation of the first intermediate pinion (20) is parallel to the axis of rotation of the output shaft (17).

10. Geared motor according to any one of the preceding claims, **characterized in that** the thickness (e) of the tooth (43) of the output toothing (41) of the driven wheel (40) is between 10 and 20 millimetres.

11. Geared motor according to any one of the preceding claims, **characterized in that** the gear transmission comprises a second intermediate pinion (30) having a first and a second toothing (30a, 30b), the first toothing (30a) of the second intermediate pinion (30) meshing with a second worm screw (14b) that is as one with the drive shaft (14), and the second toothing (30b) of the second intermediate pinion (30) meshing with the output toothing (41) of the driven wheel (40) .

12. Geared motor according to the preceding claim, **characterized in that** the first toothings (20a, 30a) of the intermediate pinions (20, 30) cooperating with the worm screws (14a, 14b) are helical with opposite helix directions.
